(19) Europäisches Patentamt
European Patent Office
Office européen des brevets

(11) EP 4 346 106 A1

(12) EUROPEAN PATENT APPLICATION

(43) Date of publication:
03.04.2024 Bulletin 2024/14

(21) Application number: 22198355.4

(22) Date of filing: 28.09.2022

(51) International Patent Classification (IPC):
H04B 1/04 (2006.01)       H04B 1/16 (2006.01)
H04B 7/00 (2006.01)

(52) Cooperative Patent Classification (CPC):
H04B 1/0475; H04B 1/16; H04B 7/002

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: INTEL Corporation
Santa Clara, CA 95054 (US)

(72) Inventors:
• YAMADA, Shuhei
  Hillsboro, 97124 (US)

• ACIKALIN, Tolga
  San Jose, 95118 (US)
• YANG, Tae-Young
  Portland, 97229 (US)
• ZHOU, Zhen
  Chandler, 85248 (US)

(74) Representative: Viering, Jentschura & Partner
mbB
Patent- und Rechtsanwälte
Am Brauhaus 8
01099 Dresden (DE)

(54) CROSS-POLARIZATION DISCRIMINATION ENHANCEMENT TECHNIQUE FOR DUAL-POLARIZED ANTENNA

(57)    A communication system is provided having a transmission circuit having a transmission antenna configured to transmit a signal having a cross-polarized portion; a receiving circuit having a receiving antenna configured to receive the transmitted signal; and a correction circuit configured to provide a correction signal, wherein the correction signal comprises a correction portion corresponding to the cross-polarized portion of the signal, wherein the correction portion comprises a phase shifted signal to the cross-polarized portion of the signal; and wherein the correction circuit is integrated in at least one of the transmission circuit and the receiving circuit.

FIG.5A

EP 4 346 106 A1

## Description

### Technical Field

The present disclosure relates to communication systems using dual-polarization antennas.

### Background

Polarization diversity is one of the antenna diversity techniques that helps to improve the aggregated throughput by supporting two isolated data streams simultaneously. However, any crosstalk between two polarizations in dual-polarized antenna degrades cross-polarization discrimination (XPD) which impacts the overall system performance.

Currently, a differential feed topology, a phased array with phase shifter, and a linearly polarized antennas/ antenna arrays for each polarization have been used to reduce the cross-polarization portion in received signals. However, previous solutions required complicated antenna and feed designs, and the performance also depended on the used balun. Further, previous solutions significantly increased the complexity of the system, and could not obtain high isolation for single antenna. Further, in previous solutions using single antennas, the antenna size increased by a factor of at least two compared to a dual-polarization antenna.

### Brief Description of the Drawings

In the drawings, like reference characters generally refer to the same parts throughout the different views. The drawings are not necessarily to scale, emphasis instead generally being placed upon illustrating the principles of the invention. In the following description, various embodiments of the invention are described with reference to the following drawings, in which:

FIGS.1A and 1B show diagrams illustrating the cross-polarization discrimination in a communication system;
FIGS. 2A and 2B show illustrations of a communication system;
FIGS.3A and 3B show cross-polarized signals in a communication system;
FIGS.4A and 4B show diagrams illustrating the influence of cross-talk in linearly polarized signals in a communication system;
FIGS.5A to 5C illustrate a communication system having a correction circuit;
FIGS.6A to 6D illustrate communication systems having a correction circuit;
FIGS.7A to 7C illustrate communication systems having a correction circuit;
FIGS.8A and 8B illustrate communication signals in a communication system according to FIG.7A to FIG.7C; and
FIG.9 shows a flow diagram of a method to operate a communication system.

### Description

The following detailed description refers to the accompanying drawings that show, by way of illustration, specific details and embodiments in which the invention may be practiced.

The word "exemplary" is used herein to mean "serving as an example, instance, or illustration". Any embodiment or design described herein as "exemplary" is not necessarily to be construed as preferred or advantageous over other embodiments or designs.

The word "over" used with regards to a deposited material formed "over" a side or surface may be used herein to mean that the deposited material may be formed "directly on", e.g. in direct contact with, the implied side or surface. The word "over" used with regards to a deposited material formed "over" a side or surface, may be used herein to mean that the deposited material may be formed "indirectly on" the implied side or surface with one or more additional layers being arranged between the implied side or surface and the deposited material.

Illustratively, the communication system includes at least one antenna to transmit a signal having a vertically polarized signal portion and a horizontally polarized signal portion. The correction signal is phase shifted signal regarding the cross-polarized signal portion, and hence can reduce or cancel the cross-polarized signal portion in the received signal.

Thus, the communication system includes a correction circuit that generates a correction signal to reduce or cancel cross-polarization in a communication signal. As an example, the correction signal may have the same amplitude as an inherent cross-polarized signal portion of the communication system without correction circuit. The correction signal may be phase shifted to the cross-polarized signal portion, e.g. a phase shift of about 90 degree. The communication system may enable wideband cross-polarization cancellation. Illustratively, the communication system having the correction circuit enhances the cross-polarization discrimination, and hence the communication system provides an improved signal-to-noise ratio (SNR). Alternatively, or in addition, the communication system can have an improved overall system performance, and spectrum efficiency compared to a communication system without correction circuit. The phase between a vertically polarized signal portion and a horizontally polarized signal portion may be matched. A differential feed, phased antenna array and phase signal shifter may become optional for the communication system.

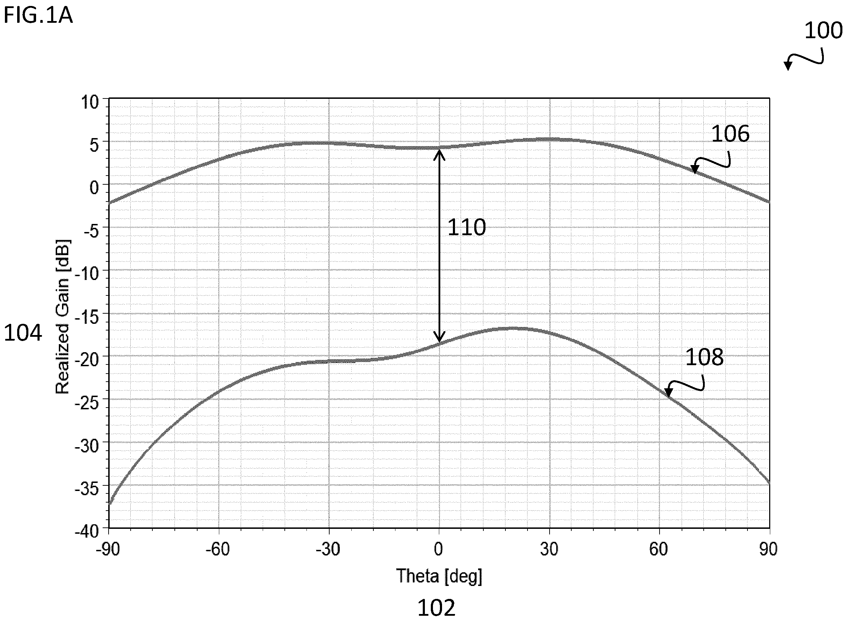

**FIG.1A** shows the 2-dimensional antenna radiation pattern 100 illustrating the antenna gain 104 as a function of direction angle 102 for a cross-polarization portion 108 of a signal and a co-polarized portion 106 of the signal, e.g. the vertically polarized portion of the signal or horizontally polarized portion of the signal. The difference between the portions 106, 108 is the cross-polarization discrimination (XPD) 110, e.g. 22.8 dB in the shown example. As can be seen, the cross-polarization discrimination 110 is about constant over a wide range of direction angles 102. FIG.1A illustrates the XPD of a communication system without or by-passed correction circuit.

The XPD (also denoted as polarization isolation) may be defined as the gain difference between linearly polarized (also denoted as co-pol) radiation and cross-polarization (also denoted as cross-pol) radiation, as shown in FIG.1A. Thus, Co-pol gain is the gain when the polarization of the Tx antenna and the polarization of the Rx antenna are the same while cross-pol gain means the polarozation of the Tx antenna and the polarization of the Rx antenna are different.

The polarization diversity or so called dual-polarization multiple input-multiple output (MIMO) employs XPD to provide diversity. This way, XPD enables multi-stream wireless communication, and thus significantly impacts the overall performance of the communication system. However, any dual-polarization antenna (also denoted as DP-antenna) may provide limited XPD due to the crosstalk between horizontal and vertical polarizations which directly degrades the receiver SNR by interfering each other.

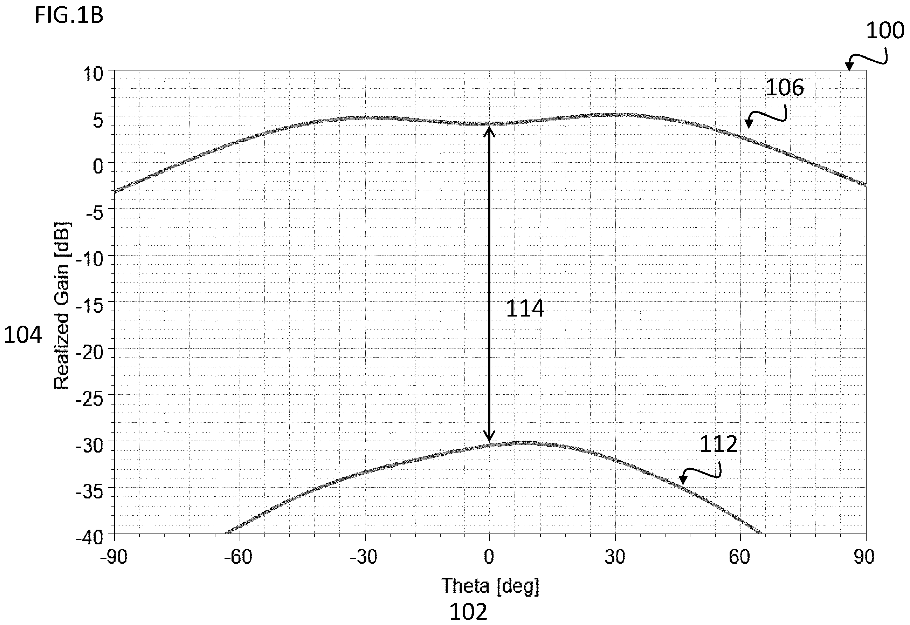

In comparison, **FIG.1B** illustrates the gain 104 for a communication system having a correction circuit. As illustrated in FIG.1B, the cross-polarization portion 112 of the signal is reduced and the XPD 114 is much larger compared to the case without correction circuit, e.g. 34.7 dB in the shown example. Thus, the correction circuit that is described in more detail in the following, can increase the XPD 114, and thus improve the quality of the signal transmission and/or reduce the power consumption of the communication system.

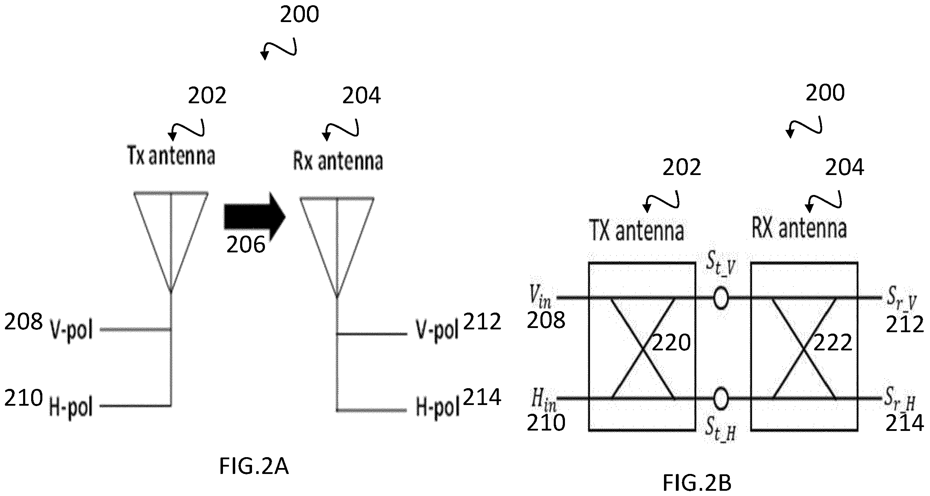

**FIG.2A** shows a schematic illustration of a communication system 200. The communication system 200 includes a transmission antenna 202 (Tx antenna) to transmit a signal 206 to a receiving antenna 204 (Rx antenna). The Tx antenna 202 and Rx antenna 204 may be configured as dually polarized to transmit/receive vertically polarized signals 208, 212 (V-pol) and horizontally polarized signals 210, 214. **FIG.2B** illustrates that a signal having a vertically polarized signal portion $V_{in}$ 208 and a horizontally polarized signal portion $H_{in}$ 210 are applied to the Tx antenna 202. However, the antenna generates a cross-polarized signal portion 220. Thus, the transmitted signal $S_{t\_V}$, $S_{t\_H}$ 206 includes a vertically polarized signal portion, a horizontally polarized signal portion, and a cross-polarized signal portion. The received signal $S_{r\_V}$, $S_{r\_H}$ 212, 214 may include a horizontally polarized signal portion 214, a vertically polarized signal portion 212, and the cross-polarized signal portion 220 from the Tx antenna. However, the Rx antenna 204 may generate another cross-polarization portion 222 from the horizontally and vertically polarized signal portion. In other words, the generation of cross-polarized signal portion reduces the proportion of the vertically and horizontally polarized signal portions, and reduce the XPD.

Illustratively, FIG.2A illustrates an over-the-air (OTA) link using DP-antennas, and the FIG.2B shows the equivalent circuit of FIG.2A using cascaded couplers to represent DP-antennas. Note, that no insertion loss and channel loss are assumed in this model.

The isolation factor I and coupling factor C of these couplers represent the port-to-port isolation and XPD of a DP-antenna, respectively. To simplify, assuming the coupler as loss-less (IL=0) with infinite port-to-port isolation (I=∞), the radiated signals from the Tx DP-antenna is given by

$$s_t = \begin{bmatrix} S_{t\_V} \\ S_{t\_H} \end{bmatrix} = H_t \cdot s_{in} = \begin{bmatrix} 1-C & jC \\ jC & 1-C \end{bmatrix} \begin{bmatrix} V_{in} \\ H_{in} \end{bmatrix} \tag{1}$$

Where $s_{in}$ is the antenna input signals, $H_t$ is the transfer function of the Tx antenna, $s_t$ is the transmit signal from the Tx antenna, C is the coupling factor (e.g. the XPD of the Tx DP-antenna), $V_{in}$ and $H_{in}$ are the antenna input signals of V-pol and H-pol respectively. Here, j represents the 270 degree total phase shift ( i.e., 90 degree phase delay and 180 degree phase shift $\left( = e^{-j\frac{\pi}{2}} + e^{j\pi} = e^{j\frac{\pi}{2}} \right)$ ) due to its nature of a DP-antenna in which the unwanted crosstalk between two polarizations involves 90 degree phase delay by the signal traveling from one port to another and 180 degree phase offset due to the opposite current flow direction. Note that the C · $V_{in}$ = $V_{cross}$ and C · $H_{in}$ = $H_{cross}$ where $V_{cross}$ and $H_{cross}$ are the amplitude of cross-pol signals of V-pol and H-pol respectively. Similarly, the received signals may be given by

$$s_r = \begin{bmatrix} s_{r\_V} \\ s_{r\_H} \end{bmatrix} = H_r \cdot H_t \cdot s = \begin{bmatrix} 1-C & jC \\ jC & 1-C \end{bmatrix} \begin{bmatrix} 1-C & jC \\ jC & 1-C \end{bmatrix} \begin{bmatrix} V_{in} \\ H_{in} \end{bmatrix} \qquad (2)$$

Where $s_r$ is the received signal, and $H_r$ is the transfer function of the Rx antenna. In case the Rx antenna is identical to the Tx antenna, the antenna transfer functions are equal ($H_r = H_t$). Thus, assuming $C^2 \approx 0$, the received V-pol and H-pol signals are described as

$$s_{r\_V} = (1-2C)V_{in} + j2CH_{in} = (1-2C)V_{in} + j2H_{cross} \qquad (3a)$$

$$s_{r\_H} = (1-2C)H_{in} + j2CV_{in} = (1-2C)H_{in} + j2V_{cross} \qquad (3b)$$

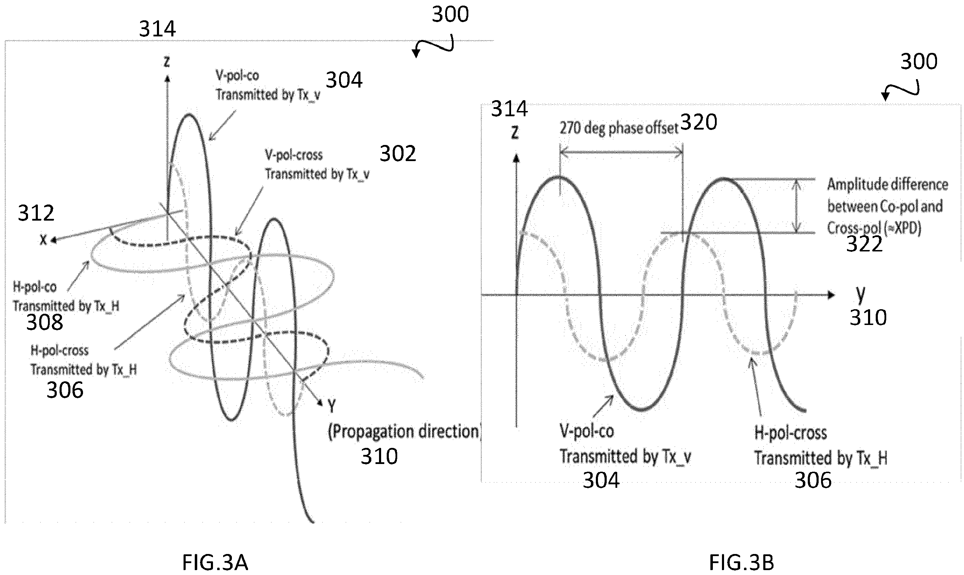

**FIG.3A** and **FIG.3B** illustrate the transmitted signals from dual-polarization antennas based on equation 3a and 3b. Here, the signal propagates in y-direction 310 with amplitudes in x-direction 312 and z-direction 314. Thus, there is an intended vertically polarized signal portion 304 (also denoted as V-pol-co) and an intended horizontally polarized signal portion 308 (also denoted as H-pol-co). Further, in FIG.2B illustrated as cross-polarization 220, the Tx antenna transmits a cross-polarized signal portion 302, 306. The cross-polarized signal portion may be generated by a crosstalk from H-pol to V-pol portion 306 (also denoted H-pol-cross) which may have an amplitude in z-direction (e.g. the same plane of V-pol-co), and a crosstalk from V-pol to H-pol portion 302 (also denoted as V-pol-cross) which may have an amplitude in x-direction (e.g. the same plane of H-pol-co). FIG.3B illustrates an overlay of V-pol-co signal portion 304 and H-pol-cross signal portion 306. As illustrated, there is an amplitude difference 322 between the V-pol-co signal portion 304 and the H-pol-cross signal portion 306 which corresponds to the XPD (see FIG.1A). Further, there is a phase offset 320 pol-cross signal portion 306. As illustrated, there is an amplitude difference 322 between the V-pol-co signal portion 304 and the H-pol-cross signal portion 306. The phase offset may be 270 degrees.

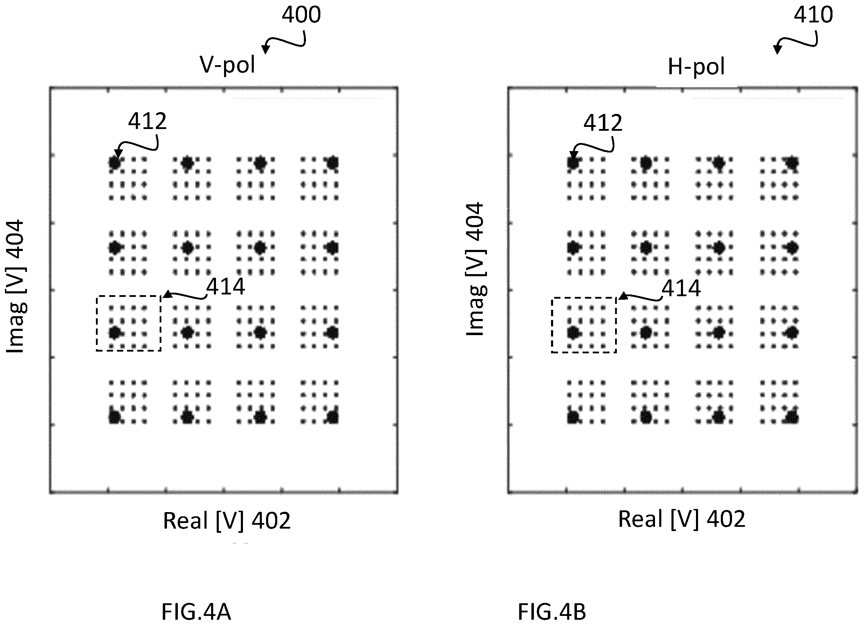

**FIG.4A** and **FIG.4B** illustrates the simulated constellation plot of a dual-pol MIMO with cross-talk 414 (i.e. the 16 dots inside the frame in FIG.4A and FIG.4B) and without crosstalk 412. In this simulation, 25dB of XPD without any noises is assumed to illustrate the impact of crosstalk. Illustrated is the real part 402 and imaginary part 404 of the vertically polarized signal portion 400 (FIG.4A) and the horizontally polarized signal portion 410 (FIG.4B) for the case of signal transmission having cross-polarized signal portion 414, e.g. having a cross-talk between the vertically polarized signal portion and the horizontally polarized signal portion, and without cross-talk 412. Compared to a "no crosstalk" constellation, each symbol for "with crosstalk" is spread out which results in degrading the SNR. Thus, as shown by FIG.4A and FIG.4B, cross-talk can lead to a widening of the signal which may result in reducing the SNR. Thus, it is desirable to have a signal transmission without cross-talk 412.

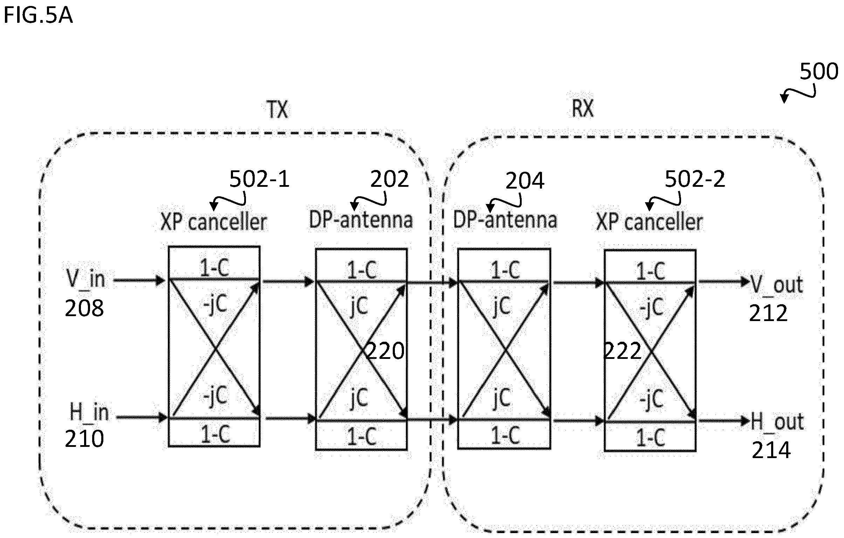

**FIG.5A** illustrates a schematic diagram of a communication system 500 having a correction circuit 502-1, 502-2 (also denoted as cross-polarization canceller or XP canceller) configured to reduce or cancel the cross-polarization signal portion 220, 222 in the received signal V_out 212, H_out 214 when using dual polarized antennas (also denoted as DP antenna) 202, 204.

As described above, since the crosstalk between two polarizations causes the degraded isolation, the XPD can be improved by cancelling the crosstalk which can be realized by the correction circuit which transfer function may be designed as complex conjugation of the DP-antenna. For example, the cross-pol correction circuit generates a correction signal having the same amplitude of the cross-pol signal but only 90 degree phase shift regarding the V-pol-co.

As described in equation 2, the received signal $s_r$ in this communication system can be expressed as:

$$s_r = H_{cancel\_r} \cdot H_{ant\_r} \cdot H_{ant\_t} \cdot H_{cancel\_t} \cdot s_t \qquad (4)$$

Where $H_{ant\_t}$, and $H_{ant\_r}$ are the transfer functions of the transmit and receive antennas, $H_{cancel\_t}$, and $H_{cancel\_r}$ are the transfer functions of the transmit and receive correction circuit, and $s_t$ is the antenna input signal. If the correction circuit is designed as the complex conjugation of the DP-antennas, equation 4 can be expressed as:

$$s_r = H^*_{ant\_r} \cdot H_{ant\_r} \cdot H_{ant\_t} \cdot H^*_{ant\_t} \cdot s_t \tag{5}$$

Where $H^*_t$ and $H^*_r$ are the complex conjugation of the transmit and receive antenna transfer functions. Thus, it follows for the received signal $s_r$:

$$s_r = \begin{bmatrix} s_{r\_V} \\ s_{r\_H} \end{bmatrix} = \begin{bmatrix} 1-C & -jC \\ -jC & 1-C \end{bmatrix} \begin{bmatrix} 1-C & jC \\ jC & 1-C \end{bmatrix} \begin{bmatrix} 1-C & jC \\ jC & 1-C \end{bmatrix} \begin{bmatrix} 1-C & -jC \\ -jC & 1-C \end{bmatrix} \begin{bmatrix} V_{in} \\ H_{in} \end{bmatrix} \tag{6}$$

Assuming $C^2 \approx 0$, the received signal $s_r$ is about:

$$s_r \approx (1-4C) \begin{bmatrix} 1 & 0 \\ 0 & 1 \end{bmatrix} \begin{bmatrix} V_{in} \\ H_{in} \end{bmatrix} \tag{7}$$

The identity matrix in equation 7 indicates that the correction circuit isolates the two polarizations.

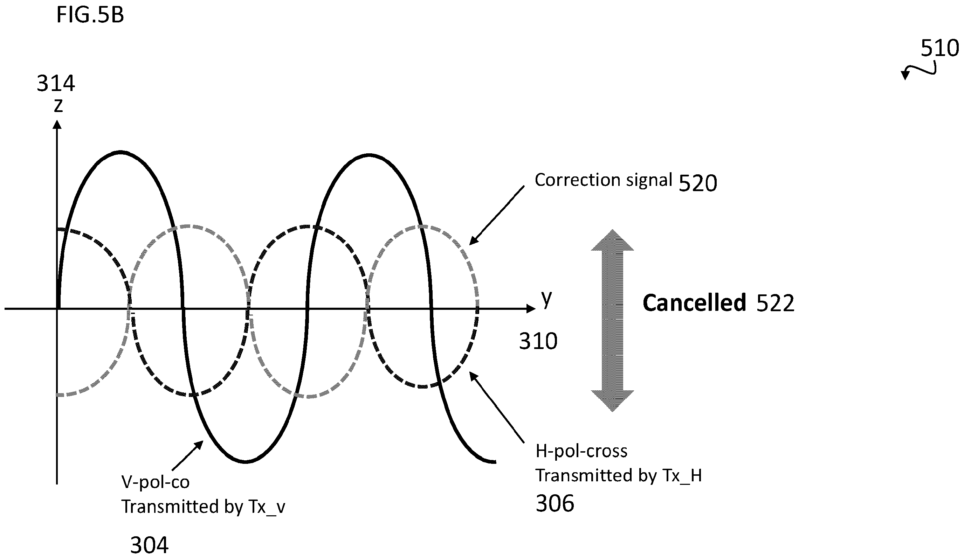

**FIG.5B** illustrates the effect of the correction circuit 502-1, 502-2 that generates a correction signal 520, e.g. a correction signal in case of same amplitudes, that has the same polarization direction as H-pol-cross 306 but has 180 ° phase offset against H-pol-cross. Thus, the correction signal 520 superimposes the cross-polarized signal portion H-pol-cross and reduces or cancels the cross-polarized signal portion (in FIG.5B illustrated by the double arrow 522).

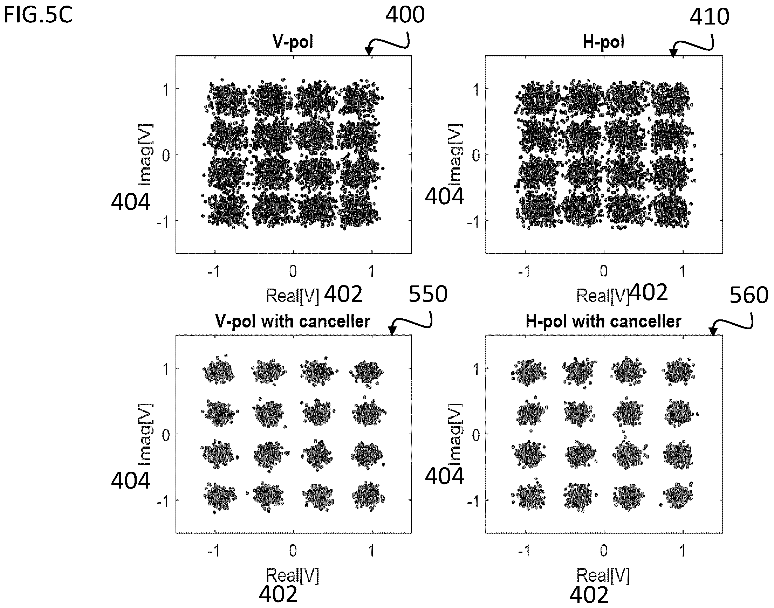

**FIG.5C** illustrates the effect of the correction circuit in the vertically polarized signal V-pol with correction circuit 550 (complete cancellation of cross-pol) compared to the case without correction circuit 400, and of a horizontally polarized signal H-pol with correction circuit 560 (complete cancellation of cross-pol) and compared to the case without correction circuit 410. As illustrated, the correction circuit can result in received signals that have an improved discrimination.

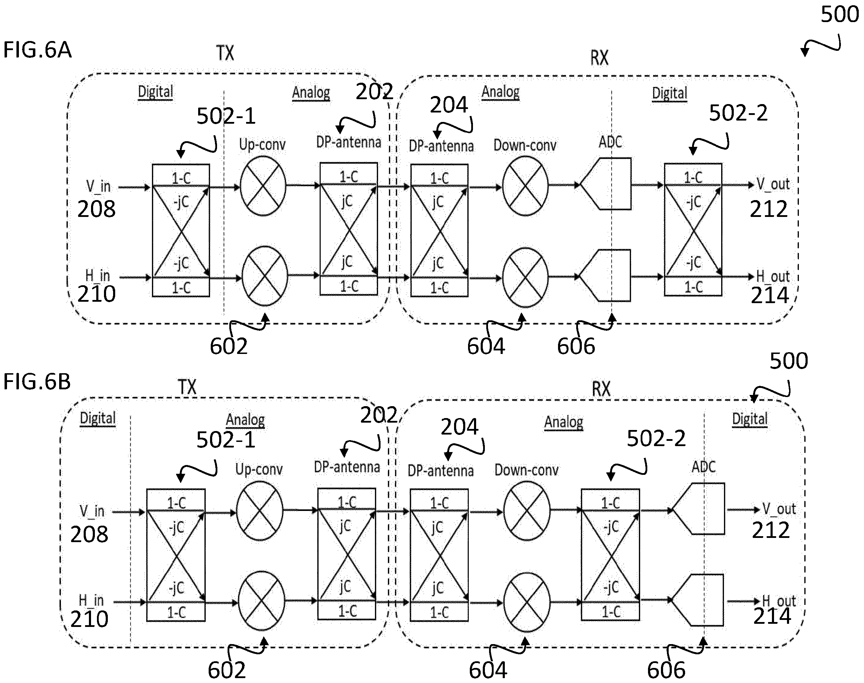

**FIG.6A** to **FIG.6D** illustrate examples of implementing the correction circuit 502-1, 502-2 in the communication system 500.

The correction circuit as another coupler generates a correction signal having amplitude that may be the same as, less, or more than the amplitude of the cross-pol signal but with 90 degree phase shift regarding the communication signal which makes the correction signal 180 degree phase offset from the cross-pol signal. This way, the correction circuit reduces or cancels the cross-pol signal portion, e.g. regardless of the coupling topology. As an example, the correction circuit may be implemented galvanic or non-galvanic, implemented in Tx/Rx or both Tx and Rx, as lumped elements and/or distributed elements, as well as in the digital domain, in the baseband, the intermediate frequency (IF) domain or the radio frequency (RF) domain.

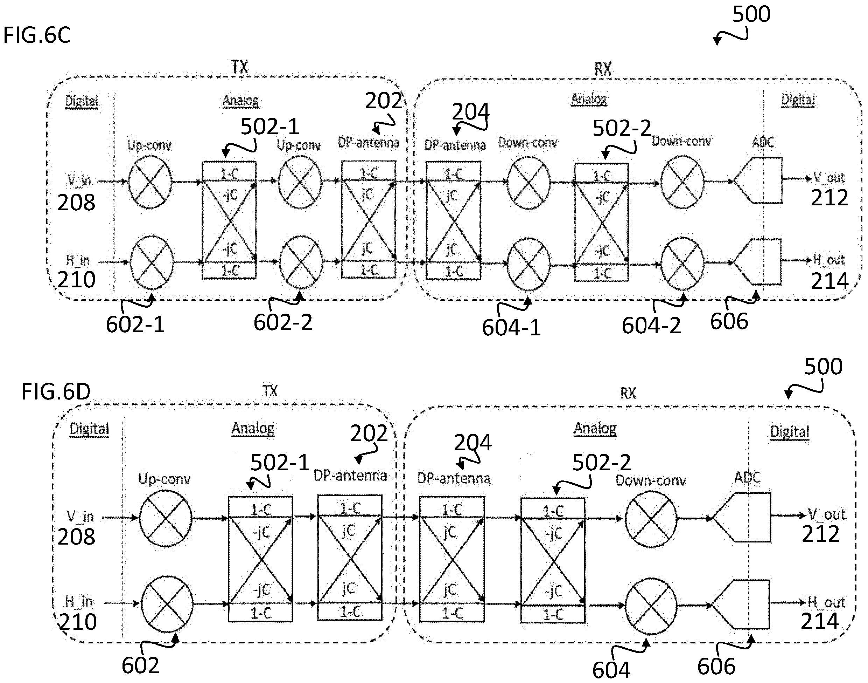

As an example, the correction circuit may be implemented in the digital domain of the transmission circuit Tx and/or the digital domain of the receiving circuit Rx as illustrated in **FIG.6A.** Thus, the analog domain of Tx having an up-converter 602 and the DP-antenna 202 may be free of correction circuit. Further, the analog domain of Rx having the down-converter 604 and interface/transition to the analog-to-digital changer ADC 606 may be free of correction circuit 502-2. Alternatively, the correction circuit may be implemented in the analog domain of Tx and/or in the analog domain of Rx, as illustrated FIG.6B to FIG.6D. Thus, the digital domain of Tx and/or the digital domain of Rx may be free of correction circuit. The correction circuit 502-1, 502-2 may be implemented before the up-conversion of the signal/after the down-conversion of the signal as illustrated in FIG.6B. Alternatively, or in addition, correction circuit 502-1, 502-2 may be implemented intermediate between up-conversions of the signal/the down-conversions of the signal as illustrated in FIG.6C. Alternatively, or in addition, correction circuit 502-1, 502-2 may be implemented after the up-conversion of the signal/before the down-conversion of the signal as illustrated in FIG.6D. However, these are only examples and further implementations are possible. As an example, the correction circuit may be implemented completely in Tx or Rx, e.g. completely in the digital domain, the analog domain, or the digital domain and the analog domain of one of Tx and Rx (not illustrated).

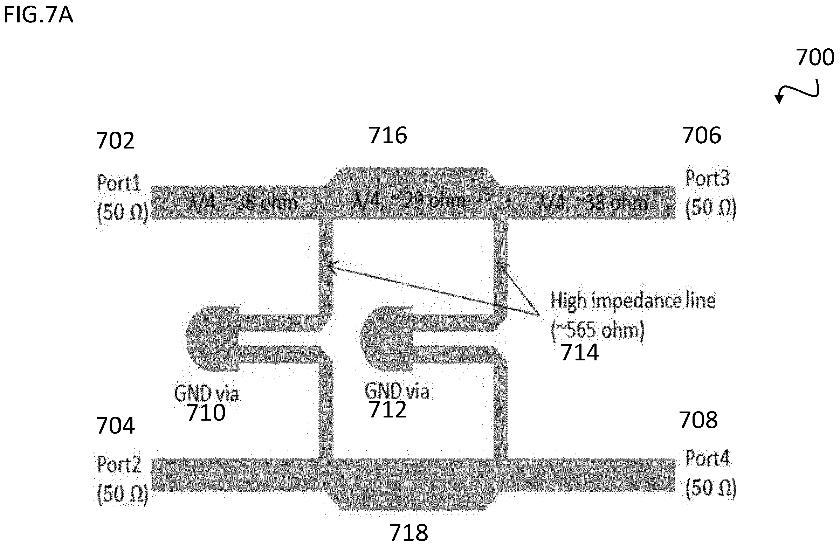

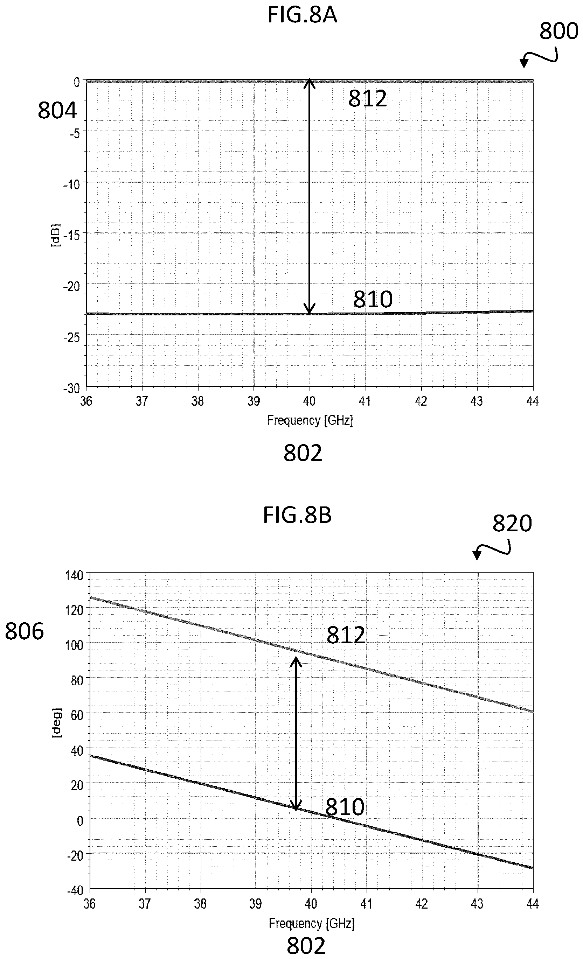

As an example of a correction circuit illustrated in FIG.6D, FIG.7A to FIG.7C shows a correction circuit implemented in an RF chain, and FIG.8A to FIG.8B shows the simulation results.

**FIG.7A** illustrates an example of a correction circuit 700. The correction circuit 700 may include a first input 702 (also denoted as Port1), a second input 704 (also denoted as Port2), a first output 706 (also denoted as Port3), and a second output 708 (also denoted as Port4). The correction circuit 700 may be configured that the signal provided at the first output 706 may be based on the signal provided at the first input 702 and corresponds to the signal provided at the second input 704. Alternatively, or in addition, the correction circuit 700 may be configured that the signal provided at the second output 706 may be based on the signal provided at the second input 704 and corresponds to the signal provided at the first input 702. As an example, the correction circuit 700 may include short coupled lines using ground vias 710, 712 through high impedance lines 714 coupling the inputs 702, 704 with the outputs 706, 708.

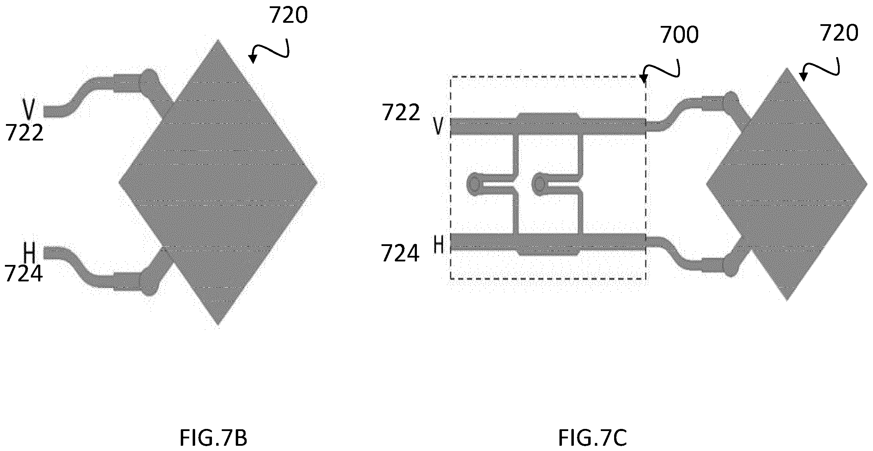

**FIG.7B** illustrates a patch antenna 720 of the transmission circuit and/or receiving circuit having a first port 722 for vertically polarized signals and a second port 724 for horizontally polarized signals. **FIG.7C** illustrates the correction circuit 700 of FIG.7A coupled to the antenna of FIG.7B.

In other words, the branch lines 714 may include shorted coupled lines by vias 710, 712 which enable high characteristic impedance while the coupling coefficient is controlled by adjusting the impedance ratio between the main line 716, 718 and branch line 714 (FIG.8A). The 90 degree phase offset is created by the nature of hybrid coupler structure (FIG.8B).

**FIG.8A** shows in a scattering matrix diagram 800 the scattering parameters 804 as a function of frequency 802 of signals through the correction circuit illustrated in FIG.7A for a communication signal 812 from the first input 702 to the first output 706 as well as from second input 704 to the second output 708; for a correction signal 810 from the second input 704 to the first output 706 as well as from the first input 702 to the second output 708. The XPD between the communication signal 812 and the correction signal 810 is about 22.7 dB. **FIG.8B** shows the phase 806 of the communication signal 812 and the correction signal 810 which difference 806 is 90 degrees.

In the example illustrated in FIG7C, the correction circuit 700 may provide an XPD improvement of about 12 dB (see also FIG.1A and FIG.1B).

The antenna (Tx and/or Rx) and correction circuit can be implemented in a monolithic design and/or integrated in a heterogeneous design. A heterogeneous design may allow to integrate and implement components independently and may increase design flexibility, and overall ease of design. Dual-pol antennas can be constructed using discrete metal structures such as metal chassis and frames, as well as metal layers on printed circuit boards (PCB), an organic package substrate, or on silicon (or similar substrates such as glass, quartz, and etc.). The correction circuit can be implemented on the same substrate as the antenna or metal layers, substrates or structures different from the dual-pol antenna. As an example, a dual-pol antenna may be formed using package substrate layers and the correction circuit may be formed using metal layers in the silicon of the radio frequency integrated circuit (RFIC) that drives the antenna. In addition, the correction circuit can be formed of at least one of lumped elements, distributed elements, and variable components, e.g. variable inductor, capacitor, amplifier and phase shifter. This way, a tunable correction circuit is provided.

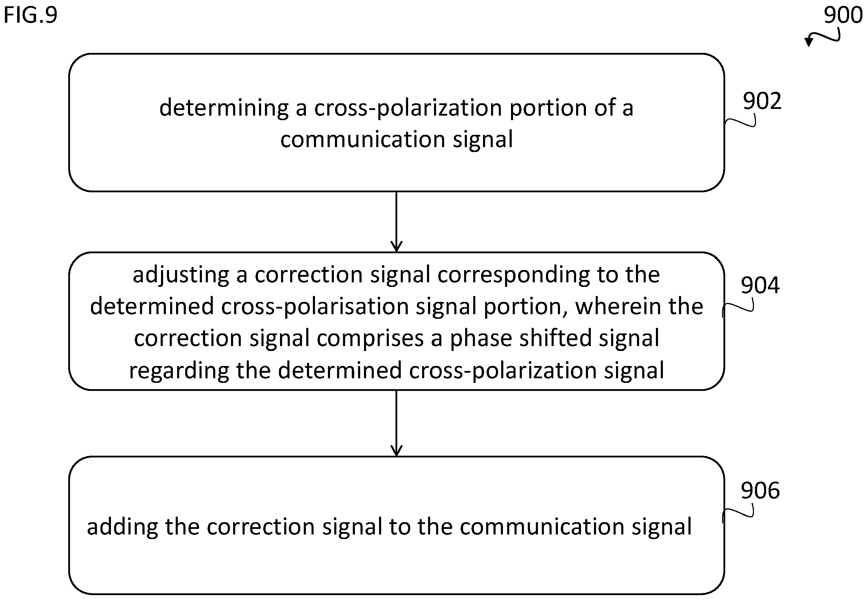

**FIG.9** shows a flow diagram of a method to operate a communication system. The method 900 may include determining 902 a cross-polarization portion of a communication signal; adjusting 904 a correction signal corresponding to the determined cross-polarization signal portion, wherein the correction signal comprises a phase shift regarding the determined cross-polarization signal; and adding 906 the correction signal to the communication signal. The determined cross-polarization may include at least one of an amplitude and a phase angle.

In the following, various aspects of the present disclosure will be illustrated:

Example 1 is a communication system, including: a transmission circuit having a transmission antenna configured to transmit a signal having a cross-polarized portion; a receiving circuit having a receiving antenna configured to receive the transmitted signal; and a correction circuit configured to provide a correction signal, wherein the correction signal includes a correction portion corresponding to the cross-polarized portion of the signal, wherein the correction portion includes a phase shift to the cross-polarized portion of the signal; and wherein the correction circuit is integrated in at least one of the transmission circuit and the receiving circuit.

In Example 2, the subject matter of Example 1 can optionally include that the correction portion of the correction signal has an amplitude lower than the amplitude of the cross-polarized portion of the signal.

In Example 3, the subject matter of Example 1 can optionally include that the correction portion of the correction signal has about the same amplitude as the cross-polarized portion of the signal.

In Example 4, the subject matter of any one of Examples 1 to 3 can optionally include that the phase shift for correction signal is about 90° regarding the communication signal.

In Example 4a, the subject matter of any one of Examples 1 to 4 can optionally include that the phase shift is in a range of 90°±180° regarding the communication signal.

In Example 5, the subject matter of any one of Examples 1 to 4a can optionally include that the correction circuit includes at least a first input, a second input, a first output, and a second output, and wherein the correction circuit is configured that the signal provided at the first output corresponds to the signal input at the first input and a coupled signal corresponding to the signal input to the second input, and/or wherein the correction circuit is configured that the signal provided at the second output corresponds to the signal input at the second input and a coupled signal corresponding to the signal input to the first input.

In Example 6, the subject matter of any one of Examples 1 to 5 can optionally include that the correction circuit includes a galvanic coupling structure configured to provide the coupled signal.

In Example 7, the subject matter of any one of Examples 1 to 6 can optionally include that the correction circuit includes a non-galvanic coupling structure configured to provide the coupled signal.

In Example 8, the subject matter of any one of Examples 1 to 7 can optionally include that the signal includes a vertically polarized signal portion and a horizontally polarized signal portion, and the cross-polarized signal portion is a parasitic signal portion.

In Example 9, the subject matter of any one of Examples 1 to 8 can optionally include that the correction signal includes a vertically polarized signal portion and a horizontally polarized signal portion.

In Example 10, the subject matter of any one of Examples 1 to 9 can optionally include that the signal includes a first signal modulation corresponding to an information to be transferred; and wherein the correction signal includes a second modulation corresponding to the first modulation.

In Example 11, the subject matter of any one of Examples 1 to 10 can optionally include that the correction signal is combined with the signal to be transmitted by the transmission antenna.

In Example 12, the subject matter of any one of Examples 1 to 11 can optionally include that the correction signal is combined with the signal received by the receiving antenna.

In Example 13, the subject matter of any one of Examples 1 to 12 can optionally include that the correction circuit is integrated in part in at least one of the transmission circuit and the receiving circuit.

In Example 14, the subject matter of any one of Examples 1 to 13 can optionally include that the transmission circuit includes an analog domain for processing analog signals and a digital domain for processing digital signals, wherein the correction circuit at least in part is integrated in at least one of the analog domain and the digital domain.

In Example 15, the subject matter of any one of Examples 1 to 14 can optionally include that the receiving circuit includes an analog domain for processing analog signals and a digital domain for processing digital signals, wherein the correction circuit at least in part is integrated in at least one of the analog domain and the digital domain.

In Example 16, the subject matter of any one of Examples 1 to 15 can optionally include that the correction circuit is embedded at least in part in the transmission circuit and the receiving circuit.

In Example 17, the subject matter of any one of Examples 1 to 16 can optionally include that the correction circuit is embedded in the transmission circuit and the receiving circuit is free of correction circuit.

In Example 18, the subject matter of any one of Examples 1 to 17 can optionally include that the correction circuit is embedded in the receiving circuit and the transmission circuit is free of correction circuit.

In Example 19, the subject matter of any one of Examples 1 to 18 can optionally include that the correction circuit is monolithically integrated with at least one of the transmission circuit and the receiving circuit.

In Example 20, the subject matter of any one of Examples 1 to 19 can optionally include a branch line coupled to a ground electrode and to a transmission line coupled to an antenna of one of the transmission circuit or receiving circuit.

In Example 21, the subject matter of any one of Examples 1 to 20 can optionally include that the correction circuit is formed in a substrate, a package, a printed circuit board or any combination thereof of at least one of the transmission circuit and the receiving circuit.

In Example 22, the subject matter of any one of Examples 1 to 21 can optionally include that the correction circuit is configured as at least one of a lumped circuit, a distributed circuit, or a combination thereof.

In Example 23, the subject matter of any one of Examples 1 to 22 can optionally include that the correction circuit comprises at least one tunable component configured to adjust at least one of the phase and the amplitude of the correction signal.

Example 24 is a communication means, including at least one of a transmission means configured to transmit a signal having a cross-polarized portion and a receiving means configured to receive a cross-polarized portion of a transmitted signal; and a correction means configured to provide a correction signal, wherein the correction signal includes a correction portion corresponding to the cross-polarized portion of the signal, wherein the correction portion includes a phase shift to the cross-polarized portion of the signal; and wherein the correction means is integrated in the respective one of the transmission means and the receiving means.

In Example 25, the subject matter of Example 24 can optionally include that the correction portion of the correction signal has an amplitude lower than the amplitude of the cross-polarized portion of the signal.

In Example 26, the subject matter of Example 24 can optionally include that the correction portion of the correction signal has about the same amplitude as the cross-polarized portion of the signal.

In Example 27, the subject matter of any one of Examples 24 to 26 can optionally include that the phase shift is about 90° regarding the communication signal.

In Example 27a, the subject matter of any one of Examples 24 to 27 can optionally include that the phase shift is in a range of 90°±180° regarding the communication signal.

In Example 28, the subject matter of any one of Examples 24 to 27a can optionally include that the correction means includes at least a first input, a second input, a first output, and a second output, and wherein the correction means is configured that the signal provided at the first output corresponds to the signal input at the first input and a coupled signal corresponding to the signal input to the second input, and/or wherein the correction means is configured that the signal provided at the second output corresponds to the signal input at the second input and a coupled signal corresponding to the signal input to the first input.

In Example 29, the subject matter of any one of Examples 24 to 28 can optionally include that the correction means includes a galvanic coupling means configured to provide the coupled signal.

In Example 30, the subject matter of any one of Examples 24 to 29 can optionally include that the correction means includes a non-galvanic coupling means configured to provide the coupled signal.

In Example 31, the subject matter of any one of Examples 24 to 30 can optionally include that the signal includes a vertically polarized signal portion and a horizontally polarized signal portion, and the cross-polarized signal portion is a parasitic signal portion.

In Example 32, the subject matter of any one of Examples 24 to 31 can optionally include that the correction signal includes a vertically polarized signal portion and a horizontally polarized signal portion.

In Example 33, the subject matter of any one of Examples 24 to 32 can optionally include that the signal includes a first signal modulation corresponding to an information to be transferred; and wherein the correction signal includes a second modulation corresponding to the first modulation.

In Example 34, the subject matter of any one of Examples 24 to 33 can optionally include that the correction signal is combined with the signal to be transmitted by the transmission antenna.

In Example 35, the subject matter of any one of Examples 24 to 34 can optionally include that the correction signal is combined with the signal received by the receiving antenna.

In Example 36, the subject matter of any one of Examples 24 to 35 can optionally include that the correction means is integrated in part in at least one of the transmission means and the receiving means.

In Example 37, the subject matter of any one of Examples 24 to 36 can optionally include that the transmission means includes an analog domain for processing analog signals and a digital domain for processing digital signals, wherein the correction means at least in part is integrated in at least one of the analog domain and the digital domain.

In Example 38, the subject matter of any one of Examples 24 to 37 can optionally include that the receiving means includes an analog domain for processing analog signals and a digital domain for processing digital signals, wherein the correction means at least in part is integrated in at least one of the analog domain and the digital domain.

In Example 39, the subject matter of any one of Examples 24 to 38 can optionally include that the correction means is embedded at least in part in the transmission means and the receiving means.

In Example 40, the subject matter of any one of Examples 24 to 39 can optionally include that the correction means is embedded in the transmission means and the receiving means is free of correction means.

In Example 41, the subject matter of any one of Examples 24 to 40 can optionally include that the correction means is embedded in the receiving means and the transmission means is free of correction means.

In Example 42, the subject matter of any one of Examples 24 to 41 can optionally include that the correction means is monolithically integrated with at least one of the transmission means and the receiving means.

In Example 43, the subject matter of any one of Examples 24 to 42 can optionally include a branch line coupled to a ground electrode and to a transmission line coupled to an antenna of one of the transmission means or receiving means.

In Example 44, the subject matter of any one of Examples 24 to 43 can optionally include that the correction means is formed in a substrate, a package, a printed means board or any combination thereof of at least one of the transmission means and the receiving means.

In Example 45, the subject matter of any one of Examples 24 to 44 can optionally include that the correction means is configured as at least one of a lumped means, a distributed means, or a combination thereof.

Example 46 is a method to operate a communication system, the method including determining a cross-polarization portion of a communication signal; adjusting a correction signal corresponding to the determined cross-polarization signal portion, wherein the correction signal comprises a phase shift regarding the determined cross-polarization signal; adding the correction signal to the communication signal.

In Example 47, the subject matter of Example 46 can optionally include that the determined cross-polarization includes at least one of an amplitude and a phase angle.

In Example 48, the subject matter of Example 45 can optionally include that the correction portion of the correction signal has an amplitude lower than the amplitude of the cross-polarized portion of the signal.

In Example 49, the subject matter of Example 45 can optionally include that the correction portion of the correction signal has about the same amplitude as the cross-polarized portion of the signal.

In Example 50, the subject matter of any one of Examples 45 to 49 can optionally include that the phase shift is about 90° regarding the communication signal.

In Example 50a, the subject matter of any one of Examples 45 to 50 can optionally include that the phase shift is in a range of 90°±180° regarding the communication signal.

In Example 51, the subject matter of any one of Examples 45 to 50a can optionally include that the communication signal includes a vertically polarized signal portion and a horizontally polarized signal portion, and the cross-polarized signal portion is a parasitic signal portion.

In Example 52, the subject matter of any one of Examples 45 to 51 can optionally include that the correction signal includes a vertically polarized signal portion and a horizontally polarized signal portion.

In Example 53, the subject matter of any one of Examples 45 to 52 can optionally include that the signal includes a first signal modulation corresponding to an information to be transferred; and wherein the correction signal includes a second modulation corresponding to the first modulation.

In Example 54, the subject matter of any one of Examples 45 to 53 can optionally include that the correction signal is combined with a signal to be transmitted by a transmission antenna.

In Example 55, the subject matter of any one of Examples 45 to 54 can optionally include that the correction signal is combined with a signal received by a receiving antenna.

While the invention has been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced.

**Claims**

1. A communication system, comprising:

   a transmission circuit having a transmission antenna configured to transmit a signal having a cross-polarized portion;
   a receiving circuit having a receiving antenna configured to receive the transmitted signal; and
   a correction circuit configured to generate a correction signal, wherein the correction signal comprises a correction portion corresponding to the cross-polarized portion of the signal, wherein the correction portion comprises a phase shifted signal to the cross-polarized portion of the signal; and wherein the correction circuit is integrated in at least one of the transmission circuit and the receiving circuit.

2. The communication system of claim 1,
   wherein the correction circuit comprises at least a first input, a second input, a first output, and a second output, wherein the correction circuit is configured that the signal provided at the first output corresponds to the signal input at the first input and a coupled signal corresponding to the signal input to the second input; and/or wherein the correction circuit is configured that the signal provided at the second output corresponds to the signal input at the second input and a coupled signal corresponding to the signal input to the first input.

3. The communication system of claim 1 or 2,
   wherein the correction signal comprises a vertically polarized signal portion and a horizontally polarized signal portion.

4. The communication system of any one of claims 1 to 3,
   wherein the signal comprises a first signal modulation corresponding to an information to be transferred; and wherein the correction signal comprises a second modulation corresponding to the first modulation.

5. The communication system of any one of claims 1 to 4,
   wherein the correction portion of the correction signal has about the same amplitude as the cross-polarized portion of the signal.

6. The communication system of any one of claims 1 to 5,
   wherein the phase offset between the cross-polarized portion of the signal and the correction signal is about 180 °.

7. The communication system of any one of claims 1 to 6,
   wherein the correction signal is combined with the signal to be transmitted by the transmission antenna.

8. The communication system of any one of claims 1 to 7,
   wherein the correction signal is combined with the signal received by the receiving antenna.

9. The communication system of any one of claims 1 to 8,
    wherein the transmission circuit comprises an analog domain for processing analog signals and a digital domain for processing digital signals, wherein the correction circuit at least in part is integrated in at least one of the analog domain and the digital domain, and /or wherein the receiving circuit comprises an analog domain for processing analog signals and a digital domain for processing digital signals, wherein the correction circuit at least in part is integrated in at least one of the analog domain and the digital domain.

10. The communication system of any one of claims 1 to 9,
    wherein the correction circuit is embedded at least in part in the transmission circuit and the receiving circuit.

11. The communication system of any one of claims 1 to 10,
    wherein the correction circuit is monolithically integrated with at least one of the transmission circuit and the receiving circuit.

12. The communication system of any one of claims 1 to 11,
    wherein the correction circuit is formed in a substrate, a package, a printed circuit board or any combination thereof of at least one of the transmission circuit and the receiving circuit.

13. The communication system of any one of claims 1 to 12,
    wherein the correction circuit is configured as at least one of a lumped circuit, a distributed circuit, or a combination thereof.

14. A method to operate a communication system, the method comprising:

    determining a cross-polarization portion of a communication signal;
    adjusting a correction signal corresponding to the determined cross-polarization signal portion, wherein the correction signal comprises a phase shift regarding the determined cross-polarization signal; and
    adding the correction signal to the communication signal.

15. The method of claim 14,
    wherein the determined cross-polarization comprises at least one of an amplitude and a phase angle.

FIG.1A

EP 4 346 106 A1

FIG.1B

EP 4 346 106 A1

200

202    204

Tx antenna    Rx antenna

208 V-pol    V-pol 212

210 H-pol    H-pol 214

**FIG.2A**

206

200

202    204

TX antenna    RX antenna

$S_{t\_V}$

$V_{in}$    $S_{r\_V}$
208    212

220    222

$H_{in}$    $S_{r\_H}$
210    214

$S_{t\_H}$

**FIG.2B**

FIG.3A

FIG.3B

EP 4 346 106 A1

**400**

V-pol

412

414

Imag [V] 404

Real [V] 402

FIG.4A

**410**

H-pol

412

414

Imag [V] 404

Real [V] 402

FIG.4B

FIG.5A

500

EP 4 346 106 A1

FIG.5B

314

Correction signal 520

Cancelled 522

V-pol-co
Transmitted by Tx_v

304

H-pol-cross
Transmitted by Tx_H

306

310

510

EP 4 346 106 A1

FIG.5C

V-pol 400

H-pol 410

V-pol with canceller 550

H-pol with canceller 560

404 402 404 402

FIG.6A

FIG.6B

EP 4 346 106 A1

FIG.6C

FIG.6D

FIG.7A

700

EP 4 346 106 A1

702                          716                          706

Port1                                                     Port3
(50 Ω)    λ/4, ~38 ohm    λ/4, ~ 29 ohm    λ/4, ~38 ohm   (50 Ω)

                                                   High impedance line
                                                   (~565 ohm)
                                                   714

                GND via          GND via
                710              712

704                                                       708

Port2                                                     Port4
(50 Ω)                                                    (50 Ω)

                          718

FIG.7C

FIG.7B

## FIG.8A

800

804

[dB]

810

812

Frequency [GHz]

802

## FIG.8B

820

806

[deg]

812

810

Frequency [GHz]

802

FIG.9

900

determining a cross-polarization portion of a communication signal — 902

adjusting a correction signal corresponding to the determined cross-polarisation signal portion, wherein the correction signal comprises a phase shifted signal regarding the determined cross-polarization signal — 904

adding the correction signal to the communication signal — 906

Europäisches
Patentamt

European
Patent Office

Office européen
des brevets

# EUROPEAN SEARCH REPORT

Application Number

EP 22 19 8355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/116162 A1 (ELIAZ AMIR [IL] ET AL) 24 May 2007 (2007-05-24) | 1-15 | INV. H04B1/04 H04B1/16 H04B7/00 |
| Y | * the whole document * | 7 | |
| X | US 5 760 740 A (BLODGETT JAMES RUSSELL [US]) 2 June 1998 (1998-06-02) * the whole document * | 1,14 | |
| Y | US 2003/179137 A1 (WHITE GEOFFREY O [US] ET AL) 25 September 2003 (2003-09-25) * the whole document * | 7 | |

TECHNICAL FIELDS
SEARCHED        (IPC)

H04B

The present search report has been drawn up for all claims

| Place of search | Date of completion of the search | Examiner |
|---|---|---|
| Munich | 2 March 2023 | Bohnhoff, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 19 8355

This annex lists the patent family members relating to the patent documents cited in the above-mentioned European search report.
The members are as contained in the European Patent Office EDP file on
The European Patent Office is in no way liable for these particulars which are merely given for the purpose of information.

02-03-2023

| Patent document cited in search report | | Publication date | Patent family member(s) | | Publication date |
|---|---|---|---|---|---|
| US 2007116162 | A1 | 24-05-2007 | CN | 101496308 A | 29-07-2009 |
| | | | EP | 1952542 A2 | 06-08-2008 |
| | | | JP | 2009516953 A | 23-04-2009 |
| | | | US | 2007116162 A1 | 24-05-2007 |
| | | | WO | 2007057911 A2 | 24-05-2007 |
| US 5760740 | A | 02-06-1998 | BR | 9603318 A | 05-05-1998 |
| | | | CA | 2179210 A1 | 09-02-1997 |
| | | | DE | 69626250 T2 | 11-12-2003 |
| | | | EP | 0762660 A2 | 12-03-1997 |
| | | | JP | 3099027 B2 | 16-10-2000 |
| | | | JP | H09121201 A | 06-05-1997 |
| | | | KR | 970013516 A | 29-03-1997 |
| | | | US | 5760740 A | 02-06-1998 |
| US 2003179137 | A1 | 25-09-2003 | NONE | | |

EPO FORM P0459

For more details about this annex : see Official Journal of the European Patent Office, No. 12/82